**Europäisches Patentamt**

**European Patent Office**

**Office européen des brevets**

(19)

(11) Veröffentlichungsnummer: **0 337 060**

**A1**

(12) # EUROPÄISCHE PATENTANMELDUNG

(21) Anmeldenummer: **89101332.8**

(22) Anmeldetag: **26.01.89**

(51) Int. Cl.⁴: **C12G 1/02**

(30) Priorität: **22.03.88 DE 3809511**

(43) Veröffentlichungstag der Anmeldung:
**18.10.89 Patentblatt 89/42**

(84) Benannte Vertragsstaaten:
**AT CH ES FR GR IT LI**

(71) Anmelder: **Speidel, Georg**
**Endelbergstrasse**
**D-7404 Ofterdingen/Tübingen(DE)**

(72) Erfinder: **Speidel, Georg**
**Endelbergstrasse**
**D-7404 Ofterdingen/Tübingen(DE)**

(74) Vertreter: **Patentanwälte Dipl.-Ing. F.W. Möll**
**Dipl.-Ing. H.Ch. Bitterich**
**Langstrasse 5 Postfach 2080**
**D-6740 Landau/Pfalz(DE)**

(54) **Behälter zum Vergären von Maische, insbesondere Rotweinmaische.**

(57) Zum Vergären von Maische, insbesondere Rotweinmaische, dient ein liegend-zylindrischer Behälter (1) mit zwei zumindest annähernd um die horizontale Längsachse des Behälters als Drehachse drehbaren Flügeln (17a, 17b), deren Radius im wesentlichen dem Innenradius und deren Länge im wesentlichen der lichten Länge des Behälters (1) entsprechen. Die Flügel (17a, 17b) sind über zumindest Teilbereiche ihrer Fläche siebartig ausgebildet und aus einer im wesentlichen aufrechten Normallage oberhalb der Drehachse (16) in synchroner Drehbewegung mit entgegengesetzter Drehrichtung (30) über eine horizontale Lage hinaus in eine Lage unterhalb der Drehachse (16) schwenkbar. Damit wird bei einem solchen Behälter eine Möglichkeit geschaffen, um einen bei der Maischegärung zur Oberfläche der Flüssigkeit aufsteigenden Maischekuchen auf behutsame Weise in den unteren Bereich des Behälters zu verlagern, wo die Maischegärung ohne mechanische Bearbeitung des Maischekuchens und somit ohne die Gefahr, daß dabei Fremd- und Trubstoffe ausgelaugt werden, in Ruhe ablaufen kann.

Fig. 2

Xerox Copy Centre

## Behälter zum Vergären von Maische, insbesondere Rotweinmaische

Die Erfindung betrifft einen liegend-zylindrischen Behälter zum Vergären von Maische, insbesondere Rotweinmaische, mit mindestens einem zumindest annähernd um die horizontale Längsachse des Behälters als Drehachse drehbaren Flügel, dessen Radius im wesentlichen dem Innenradius und dessen Länge im wesentlichen der lichten Länge des Behälters entsprechen, wobei der Flügel den Behälter in dessen Längsrichtung gegenüber den in der Maische enthaltenen festen Bestandteilen abdichtend unterteilt.

Da gerade bei Rotwein die Farbe ein augenfälliges Qualitätsmerkmal ist, verdient bei der Bereitung von Rotwein neben dem gebiets- und sortentypischen Geschmacksbild die Gewinnung des Farbstoffes besondere Beachtung. Der Rotweinfarbstoff befindet sich innerhalb der mikroskopisch kleinen Hülsenzellen der Beeren von lebendem Zellplasma eingeschlossen und kann aus den Zellen erst austreten, wenn das Zellplasma abgetötet wird. Um den Farbstoff aus den Hülsenzellen herauszulösen, gibt es verschiedene Verfahren zur Behandlung von Rotweinmaische, deren bekanntestes die Maischegärung ist.

Bei allen Maischegärverfahren wird zunächst das Zellplasma in den Beerenzellen abgetötet und durchlässig gemacht als Voraussetzung für den Austritt des Farbstoffes; durch teils mechanische, teils physikalische und chemische Beeinflussung kann sodann die Farbstoffgewinnung beschleunigt werden.

Maische ist ein inhomogenes Gemisch aus Saft, Beerenschalen und gegebenenfalls auch Stielen, also aus Stoffen unterschiedlicher Dichte; sie neigt deshalb zur Entmischung, wobei die festen Bestandteile, die sogenannten Trester, aufschwimmen. Dieser Vorgang wird durch die bei der Maischegärung frei werdende Kohlensäure verstärkt; es entsteht ein sogenannter Tresterhut, der auf der Flüssigkeit schwimmt und sich dadurch dem Auslaugungsprozeß entzieht. Durch Berührung mit Luftsauerstoff oxidiert dieser Tresterhut und trocknet durch Erwärmung infolge der Gärung aus, wodurch Geschmack und Farbe des Weines ungünstig beeinflußt werden.

Die meisten bekannten Gärverfahren bemühen sich daher um das periodische Untertauchen oder Untergetaucnthalten des Tresterhutes. Das periodische Untertauchen erfolgt im einfachsten Falle durch Stoßen von Hand oder auch durch mechanische Umwälzung z. B. mittels Rührwerken.

Bei einem Behälter der eingangs angegebenen Art ist das Rührwerk als Wendeeinrichtung mit mindestens einem Flügel ausgebildet, durch den bei einsinniger Drehung der Behälterinhalt unabhängig von der Füllhöhe mit jeder Umdrehung zwangsläufig vollständig gewendet wird (DE-PS 31 02 134). Bei diesem bekannten Behälter schwenkt der Flügel aus einer Lage unterhalb der Drehachse unter Mitnahme des vor ihm befindlichen Behälterinhaltes zunächst nach oben. Der bei dieser Drehbewegung mitgenommene Trester rutscht spätestens dann, wenn sich der Flügel um etwa 100 Grad gedreht hat, auf die gegenüberliegende Seite des Behälters und wird von dem Flügel spätestens dann in den flüssigen Behälterinhalt gedrückt, wenn sich die Wendeeinrichtung um mehr als 270 Grad gedreht hat. Eine weitere Drehung der Wendeeinrichtung hat eine Wiederholung der vollständigen Tresterwendung zur Folge.

Bei jeder mechanischen Bearbeitung der Maische reiben sich die Beerenschalen aneinander, wodurch an den Schalenaußenseiten anhaftende Fremdstoffe, vor allem Spritzmittelrückstände, in den Saft gelangen. Außerdem werden die Schalen aufgerissen, so daß das Fruchtfleisch austritt, was zur Anreicherung des Saftes mit Trubstoffen führt. Zudem wird durch die Gefahr der Zerkleinerung von Traubenstielen und -kernen die Auslaugung von Gerb- und Bitterstoffen begünstigt. Schließlich führt jede Art mechanischer Bearbeitung der Maische zur Einmischung von Sauerstoff, was Oxydationserscheinungen hervorruft.

Zum Untergetaucnthalten eines Tresterhutes sind Behälter mit einem Senk- oder Siebboden bekannt, der in dem Gärbehälter so angeordnet wird, daß sich der Tresterhut nicht über die Oberfläche der Flüssigkeit hinaus erheben kann. Dennoch wird der sich in der Nähe der Oberfläche der Flüssigkeit unterhalb des Siebbodens bildende Maischekuchen infolge der $CO_2$-Entwicklung stark zusammengedrückt und durchgast, so daß auch er von Zeit zu Zeit gestoßen oder umgepumpt werden muß (Gerhard Troost "Technologie des Weines", 5. Auflage 1980, Seite 183 bis 197).

Der Erfindung liegt vor diesem Hintergrund die Aufgabe zugrunde, bei einem Behälter der eingangs angegebenen Art eine Möglichkeit zu schaffen, um auf schonende Weise ein Höchstmaß an Farbstoffen aus den Beerenschalen herauslösen zu können und dabei möglichst wenig Trub- oder sonstige Fremdstoffe in den Wein gelangen zu lassen.

Nach der Erfindung wird diese Aufgabe dadurch gelöst, daß zwei Flügel vorgesehen sind, die über zumindest Teilbereiche ihrer Fläche siebartig ausgebildet und aus einer im wesentlichen aufrechten Normallage oberhalb der Drehachse mit entgegengesetzter Drehrichtung über eine horizontale Lage hinaus in eine Lage unterhalb der Drehachse schwenkbar sind. Zweckmäßig sind die Flügel in synchroner Drehbewegung schwenkbar.

Die Erfindung baut auf der Überlegung auf, daß die für Beginn und Ablauf der Maischegärung verantwortlichen Hefezellen sich im wesentlichen auf den Außenseiten der Beerenschalen befinden, so daß die Gärung in der Regel im Bereich des Maischekuchens beginnt; auch ist ihre Intensität in diesem Bereich größer als im übrigen Saftbereich. Wenn es deshalb gelingt, den Maischekuchen zu bzw. nach Beginn des Gärvorganges in den unteren Bereich des Behälters zu bringen und so die Hauptintensität der Gärung nach unten zu verlagern, verläuft der Gärungsprozeß unter Ausnützung der physikalischen Gesetze der Wärmekonvektion im gesamten Behälterinhalt schnell und gleichmäßig. Dadurch wird die Freisetzung der Farbpigmente intensiviert. Wenn der Maischekuchen im unteren Bereich des Behälterinhalts untergetaucht bleibt, wird die bei der Gärung entstehende Wärme nach oben abgeführt und so seiner Überhitzung entgegengewirkt.

Der Vorteil der Erfindung wird im wesentlichen darin gesehen, bei einem für viele Verwendungszwecke vorteilhaften liegend-zylindrischen Behälter eine Möglichkeit geschaffen zu haben, um den zur Oberfläche der Flüssigkeit aufsteigenden Maischekuchen ohne die Maische laufend bearbeiten, z.B. wenden oder rühren zu müssen, auf behutsame Weise in den unteren Bereich des Behälters bringen zu können, wo die Gärung in einem ruhenden System ohne mechanische Bearbeitung abläuft. Dadurch werden die Beerenschalen und Kerne nicht verletzt, erleiden also keinen mechanischen Abrieb, so daß einer Auslaugung von Fremd- und Bitterstoffen, unter anderem auch von Spritzmittelrückständen, die an den Beerenschalen haften können und erst bei länger anhaltender Gärung herausgelöst werden sowie der Extraktion gerbsäurehaltiger Stoffe entgegengewirkt wird.

Die Flügel können in der Normallage zumindest annähernd parallel zueinander und zu der vertikalen Längsmittelebene des Behälters beidseits dieser angeordnet und bis in eine der Normallage entsprechende Endlage unterhalb der Drehachse schwenkbar sein.

Hinsichtlich der Anordnung der Flügel und der Ausführung der Schwenkbewegung gibt es zwei grundsätzliche Möglichkeiten. So kann einer der beiden Flügel an einer inneren, in den Stirnwänden des Behälters gelagerten Welle und der andere Flügel an einer diese innere Welle über Teile ihrer Länge überdeckenden, zu dieser koaxialen Hohlwelle befestigt sein, die jeweils von einer Stirnseite des Behälters her antreibbar sind. Es kann aber auch jeder Flügel an einer von zwei parallel zueinander und zu beiden Seiten der Längsmittelachse des Behälters angeordneten, in den Stirnwänden des Behälters gelagerten und von jeweils einer Stirnseite her antreibbaren Welle befestigt sein.

Die Flügel können in radialer Richtung gekrümmt und/oder ein- oder mehrmals geknickt ausgebildet sein.

Zwischen dem unteren und dem oberen Bereich des Behälters kann zumindest eine Überströmleitung vorgesehen sein.

Wesentlich für die Erfindung ist, daß die gegensinnige Schwenkbewegung der Flügel aus der Normallage heraus nicht in einem Zuge bis in die untere Endstellung zu erfolgen braucht, sondern daß vielmehr, dem Ablauf der Gärung angepaßt, Zwischenstellungen eingehalten werden können. Dadurch besteht die Möglichkeit, den sich bei der Gärung bildenden Maischekuchen in Abhängigkeit von dem sich bei der Schwenkbewegung der Flügel aufbauenden Gegendruck nach unten zu drücken. Da im Verlauf dieser Schwenkbewegung der horizontale Durchmesser des Behälters durchlaufen wird, wird durch die in dem Maischekuchen verstärkt ablaufende Gärung die gesamte sich oberhalb des durch die Flügel zurückgehaltenen Maischekuchens befindliche Flüssigkeit gleichmäßig durchgast und in Gärung versetzt, so daß der Gärungsprozeß im gesamten Behälterinhalt schnell und gleichmäßig abläuft.

Gegebenenfalls ist es auch möglich, in zeitlichen Abständen die Flügel zurück- und wieder nach unten zu schwenken, um den Maischekuchen mit Saft durchzuspülen. In jedem Fall bleiben die Trester unterhalb der Flügel, die den Saftbereich nicht verlassen sollen, um das Einmischen von Sauerstoff zu vermeiden.

Die Erfindung wird nachstehend anhand einiger in der Zeichnung dargestellter Ausführungsbeispiele näher erläutert. Es zeigt

Fig. 1 einen Vertikalschnitt durch einen Behälter nach der Erfindung,

Fig. 2 einen Querschnitt durch den Behälter entlang der Linie II-II in Fig. 1,

Fig. 3 einen Horizontalschnitt durch den Behälter entlang der Linie III-III in Fig. 2, die

Fig. 4 und 5 Querschnitte durch einen Behälter in unterschiedlichen Arbeitsphasen,

Fig. 6 einen Querschnitt durch eine andere Ausführungsform eines Behälters nach der Erfindung und

Fig. 7 einen Horizontalschnitt entlang der Linie VII-VII in Fig. 6.

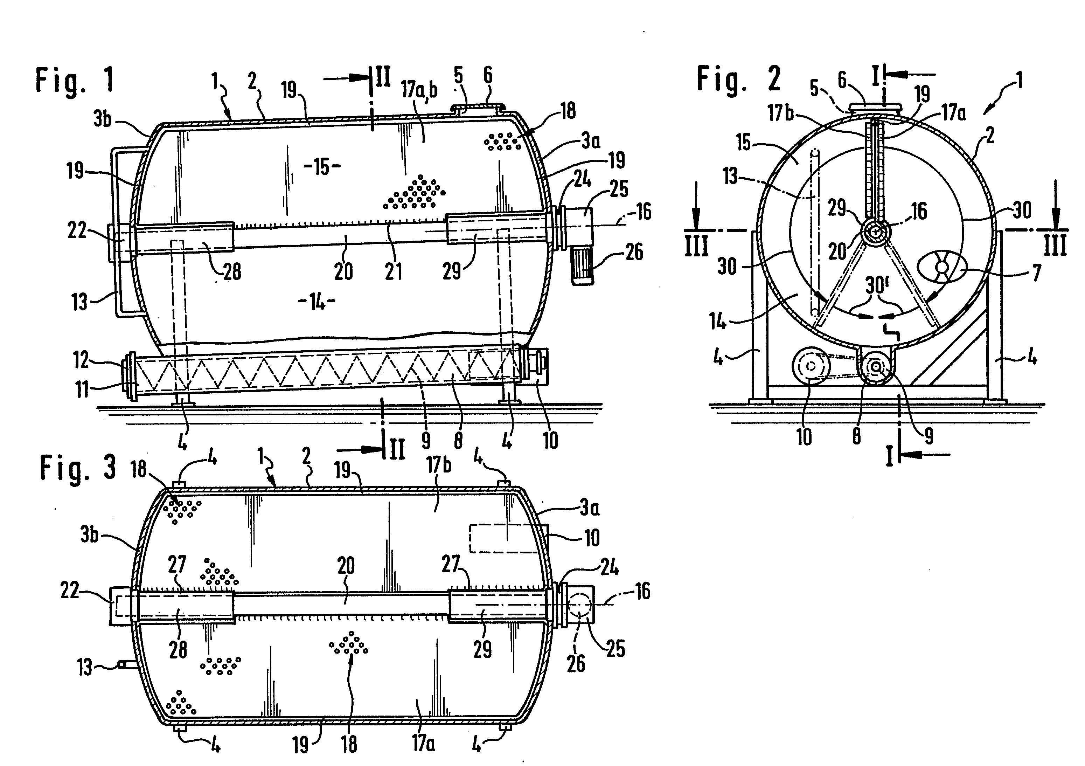

In dem in den Fig. 1 bis 3 dargestellten Ausführungsbeispiel hat der Behälter 1 liegend-zylindrische Gestalt mit einer im wesentlichen kreiszylindrischen Wandung 2 und konvex gekrümmten Stirnwänden 3a und 3b. Der Behälter ruht auf einem Ständer 4.

Im oberen Bereich des Behälters 1 befindet sich ein Mannloch 5 mit einem Deckel 6; ein ähnliches Mannloch 7 mit einem Deckel befindet sich auch in der Stirnwand 3a. Im unteren Bereich des Behälters 1 ist eine etwa halbkreisförmig ausgebildete Ablaufrinne 8 angeordnet, in der sich eine Förderschnecke 9 befindet, die durch einen Elektromotor 10 antreibbar ist. Zumindest die Ablaufrinne 8, gegebenenfalls aber der gesamte Behälter 1, sind auf dem Ständer 4 etwas geneigt angeordnet, so daß ein Gefälle zu einer Austragöffnung 11 hin erzeugt wird, die durch einen Verschlußdeckel 12 abschließbar ist. Die äußere Ausstattung des Behälters 1 wird durch eine Überströmleitung 13 vervollständigt, die für einen eventuellen Druckausgleich eine Verbindung zwischen dem unteren Bereich 14 des Behälters zu seinem oberen Bereich 15 hin schafft.

Im Inneren des Behälters 1 sind um eine Drehachse 16 zwei Flügel 17a, 17b schwenkbar. Die Flügel 17a, 17b sind, wie vor allem in den Fig. 1 und 3 angedeutet, mit einer entsprechend großen Anzahl von Durchbrechungen 18 siebartig ausgebildet. Jeder der beiden Flügel folgt in seiner Form dem Längsschnitt des Behälters 1; der Spalt zwischen dem äußeren Rand der Flügel 17a, 17b und der Innenwand des Behälters 1 kann durch Gummilippen 19 gedichtet sein, die zugleich einen Toleranzausgleich zwischen dem Außenrand der Flügel 17a. 17b und den Innenflächen der Behälterwandung 2 bzw. der Stirnwände 3a, 3b schaffen.

Im dargestellten Ausführungsbeispiel ist der Flügel 17a an einer inneren Welle 20 z. B. durch eine Schweißnaht 21 befestigt. Die Welle 20 ist in der Stirnwand 3b in einem Lager 22 und in der Stirnwand 3a in einem Lager 24 gelagert. Hier ist die Welle 20 über ein Getriebe 25 mit einem Antrieb, z.B. einem Elektromotor 26 verbunden. Der andere Flügel 17b ist über Schweißnähte 27 mit zwei Hohlwellenabschnitten 28, 29 verbunden, die koaxial zu der inneren Welle 16 auf dieser angeordnet und um diese drehbar sind. Der dem Lager 24 an der Stirnwand 2 zugeordnete Hohlwellenabschnitt 29 ist ebenfalls mit dem Getriebe 25 verbunden und zwar so, daß die beiden Flügel 17a und 17b aus der in Fig. 2 gezeigten aufrechten Normalstellung heraus eine entgegengesetzte Drehbewegung in Richtung der Pfeile 30 bis zu der in Fig. 2 gestrichelt angedeuteten unteren Stellung, gegebenenfalls auch noch darüber hinaus und wieder zurück in die Ausgangsstellung ausführen können.

Der Ablauf einer Maischegärung in einem nach der Erfindung ausgebildeten Behälter wird nachstehend anhand der Fig. 2 sowie 4 und 5 näher erläutert.

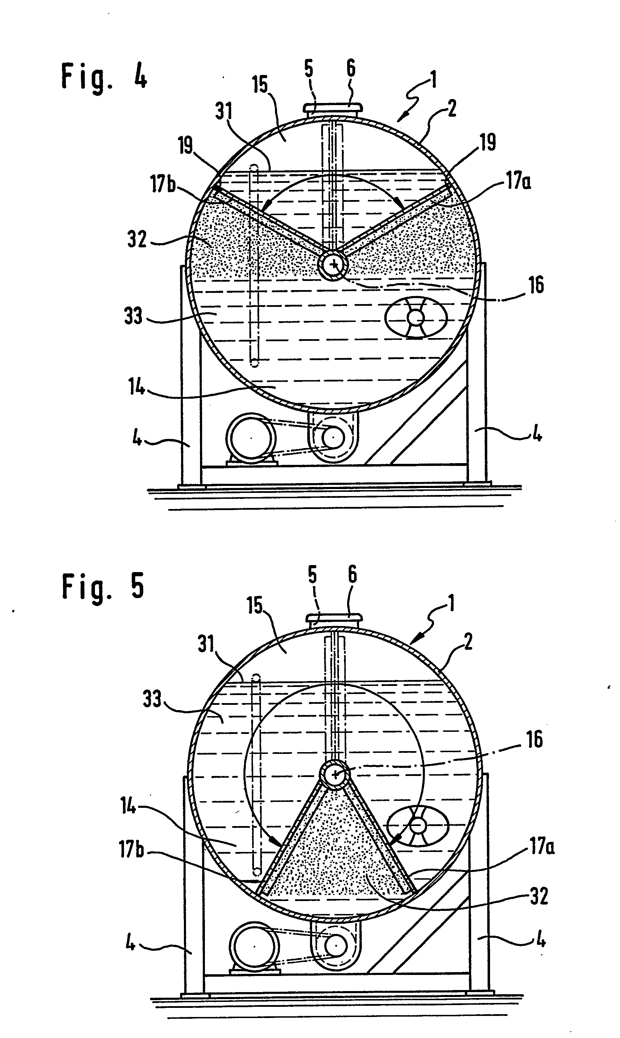

Der Behälter 1 wird in der Regel bei aufrechter und geschlossener Stellung der Flügel 17a und 17b (Fig. 2) befüllt. Das Befüllen kann über das obere Mannloch 5 erfolgen. Dabei muß allerdings Sorge dafür getragen werden, daß die Maische zu beiden Seiten der Flügel 17a, 17b einströmen kann. Zu diesem Zweck können die Flügel 17a, 17b z.B. gemeinsam in eine schräge Stellung unter Freigabe des Mannloches 6 geschwenkt werden. Die Behälterfüllung bildet dann einen Flüssigkeitsspiegel 31 (Fig. 4). Die aus der Maischefüllung zunächst langsam, bei Beginn der Gärung, die gegebenenfalls auch durch Erhitzen der Maische beschleunigt werden kann, rascher aufsteigenden Trester bilden an der Oberfläche der Behälterfüllung einen Maischekuchen 32, der durch Ausschwenken der beiden Flügel 17a, 17b langsam und behutsam nach unten in die Flüssigkeit 33 gedrückt wird. Die Flügel 17a, 17b schließen dabei durch die Gummilippen 19 den Bereich bis zur Behälterwandung hin ab. Die siebartige Gestaltung der Flügel 17a, 17b läßt nur die Flüssigkeit und das sich bei der Gärung bildende $CO_2$ durchtreten, während die Trester zurückgehalten werden.

Da die Trester sich beim Schwenken der Flügel 17a und 17b nach unten nach Art eines Filterkuchens an der Unterseite der Siebfläche der Flügel 17a und 17b festsetzen, steigt das für die Durchführung der Schwenkbewegung erforderliche Drehmoment mit fortschreitendem Eindringen der Flügel 17a und 17b in die Maische. Es kann deshalb zweckmäßig sein, die Flügel 17a, 17b stufenweise nach unten zu bewegen; diese Bewegung kann durch einen druckabhängig gesteuerten Motor bewirkt werden. Diese Steuerung erfolgt in der Weise, daß der Motor bei Erreichen eines bestimmten Gegendruckes die Schwenkbewegung unterbricht, bis der Druck nach Hindurchtreten einer weiteren Saftmenge durch den Maischekuchen und die Siebflächen der Flügel 17a, 17b wieder abgefallen ist. Der Motor springt dann erneut an und setzt die Schwenkbewegung um einen weiteren Winkel fort. Der Druckausgleich zwischen dem unteren Bereich 14 des Behälters 1 und seinem oberen Bereich 15 kann auch über die Überströmleitung 13 erleichtert oder beschleunigt werden. In der Endstellung ist dann etwa die in Fig. 5 dargestellte untere Lage der Flügel 17a, 17b erreicht, in der der Maischekuchen 32 sich vollständig im unteren Bereich 14 des Behälters 1 befindet überdeckt von der Flüssigkeit 33 mit ihrem Spiegel 31.

Da beim Entsaften der Maische durch Pressen eine große Saftoberfläche und somit eine große Oxidationsfläche entsteht, wodurch Farbverluste auftreten können, wird nach Beendigung des Gärvorganges die Maische zweckmäßigerweise vorentsaftet. Um dem Wein die durch die Gärung gewonnene Farbe zu erhalten, wird deshalb nach Beendigung der Maischegärung zunächst der Saft abgezogen und nur der verbliebene Trester ausgepreßt, der die Farbstoffe konzentriert enthält. Dies kann entweder in der aus Fig. 5 ersichtlichen unteren Stellung der Flügel 17a, 17b erfolgen oder zur Beschleunigung des Saftabzuges nach Rückführung der Flügel 17a, 17b in die obere Normallage gemäß Fig. 2.

Der nach Abzug des Saftes am Grunde des Behälters 1 verbliebene Trester wird durch Betätigung des Schneckenförderers 9 ausgetragen. Der Austrag kann durch eine erneute Schwenkbewegung der Flügel 17a, 17b unterstützt werden, die zu diesem Zweck bis in den Bereich der Rinne 8 bewegbar sein müssen (Pfeile 30' in Fig. 2).

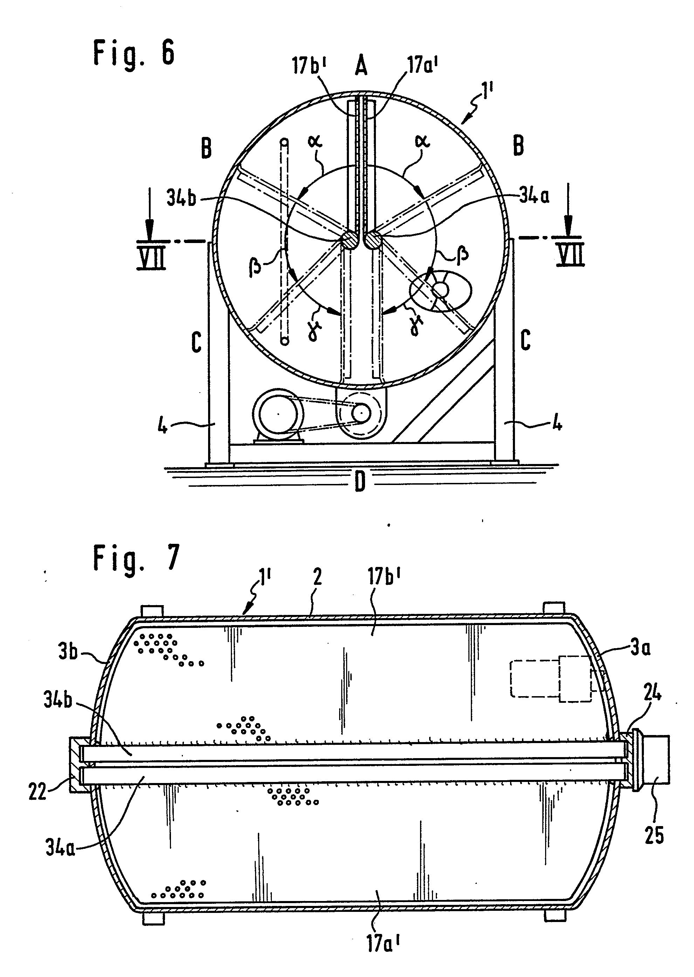

Ein weiteres Ausführungsbeispiel eines erfindungsgemäßen Behälters ist in den Fig. 6 und 7 dargestellt, die einen Behälter 1' im Querschnitt und Horizontalschnitt zeigen. Hier ist innerhalb des Behälters, der im Prinzip in gleicher Weise ausgebildet ist wie der Behälter 1 nach den Fig. 1 bis 3, jeder der Flügel 17a' und 17b' an einer eigenen Welle 34a, 34b befestigt, die ihrerseits getrennt voneinander in einem Lager 22 in der Stirnwand 3 bzw. einem Lager 24 in der Stirnwand 2 des Behälters gelagert sind. Die beiden Wellen 34a und 34b werden über das Getriebe 25 und einen in entsprechender Weise angeordneten Antriebsmotor so angetrieben, daß die Flügel 17a' und 17b' wie vorbeschrieben Schwenkbewegungen in entgegengesetzter Richtung ausführen können. Auch hier sind, wie in Fig. 6 angedeutet, unterschiedliche Stellungen der Flügel 17a', 17b' möglich, die von einer Normallage A nach einem Winkel alpha in die Stellung B und aus dieser um den Winkel beta in die Stellung C geführt werden, die der Endstellung für den Ablauf der Gärung entspricht. Die aus dieser um den Winkel gamma erreichbare Stellung D, die der Stellung A entgegengesetzt gerichtet ist, dient dem Austrag des Tresters nach Abzug des Saftes.

## Ansprüche

1. Liegend-zylindrischer Behälter zum Vergären von Maische, insbesondere Rotweinmaische mit mindestens einem zumindest annähernd um die horizontale Längsachse des Behälters als Drehachse drehbaren Flügel, dessen Radius im wesentlichen dem Innenradius und dessen Länge im wesentlichen der lichten Länge des Behälters entsprechen, wobei der Flügel den Behälter in dessen Längsrichtung gegenüber den in der Maische enthaltenen festen Bestandteilen abdichtend unterteilt, dadurch gekennzeichnet, daß zwei Flügel (17a, 17b) vorgesehen sind, die über zumindest Teilbereiche ihrer Fläche siebartig ausgebildet und aus einer im wesentlichen aufrechten Normallage oberhalb der Drehachse (16) mit entgegengesetzter Drehrichtung (30) über eine horizontale Lage hinaus in eine Lage unterhalb der Drehachse (16) schwenkbar sind.

2. Behälter nach Anspruch 1, dadurch gekennzeichnet, daß die Flügel (17a, 17b) in synchroner Drehbewegung schwenkbar sind.

3. Behälter nach Anspruch 1 oder 2, dadurch gekennzeichnet, daß die Flügel (17a, 17b) in der Normallage zumindest annähernd parallel zueinander und zu der vertikalen Längsmittelebene des Behälters (1) beidseits dieser angeordnet sind.

4. Behälter nach einem der Ansprüche 1 bis 3, dadurch gekennzeichnet, daß die Flügel (17a, 17b) bis in eine der Normallage entsprechende Endlage unterhalb der Drehachse (16) schwenkbar sind.

5. Behälter nach einem der Ansprüche 1 bis 4, dadurch gekennzeichnet, daß einer der beiden Flügel (17a) an einer inneren, in den Stirnwänden des Behälters gelagerten Welle (20) und der andere Flügel (17b) an einer diese innere Welle über Teile ihrer Länge überdeckenden, zu dieser koaxialen Hohlwelle (28, 29) befestigt sind, die jeweils von einer Stirnseite des Behälters (1) her antreibbar sind.

6. Behälter nach einem der Ansprüche 1 bis 4, dadurch gekennzeichnet, daß jeder Flügel (17a', 17b') an einer von zwei parallel zueinander und zu beiden Seiten der Längsmittelachse des Behälters angeordneten, in den Stirnwänden des Behälters gelagerten und von jeweils einer Stirnseite her antreibbaren Welle (34a, 34b) befestigt ist.

7. Behälter nach einem der Ansprüche 1 bis 6, dadurch gekennzeichnet, daß die Flügel (17a, 17b) in radialer Richtung gekrümmt und/oder ein- oder mehrmals geknickt ausgebildet sind.

8. Behälter nach einem der Ansprüche 1 bis 7, dadurch gekennzeichnet, daß zwischen dem unteren (14) und dem oberen Bereich (15) des Behälters (1) zumindest eine Überströmleitung (13) vorgesehen ist.

EP 0 337 060 A1

Fig. 2

Fig. 1

Fig. 3

„Schmetterlingsflüge

Fig. 4

Fig. 5

„ Schmetterlingsflügel

Fig. 6

Fig. 7

„Schmetterlingsflügel

**Europäisches Patentamt**

Nummer der Anmeldung

EP 89 10 1332

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 617 300 (H. RIEGER)<br>* Figuren; Ansprüche *<br>--- | 1 | C 12 G    1/02 |
| A | AT-A- 381 720 (G. PIRIWE)<br>* Figuren; Ansprüche *<br>----- | 1 | |

|  | RECHERCHIERTE SACHGEBIETE (Int. Cl.4) |
|---|---|
|  | C 12 G |

Der vorliegende Recherchenbericht wurde für alle Patentansprüche erstellt

| Recherchenort | Abschlußdatum der Recherche | Prüfer |
|---|---|---|
| DEN HAAG | 10-07-1989 | COUCKE A.O.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)